# EUROPEAN PATENT APPLICATION

(11) **EP 1 820 980 A1**
(43) Date of publication of application: **22.08.2007**
(21) Application number: 05799315.6
(22) Date of filing: 25.10.2005
(51) Int. Cl.: F16C 11/04, F16C 11/10, H04M 1/02

(54) **EXCESSIVE ROTATION PREVENTING STRUCTURE FOR ROTATION SUPPORTING MECHANISM AND PORTABLE TERMINAL**

(30) Priority: 26.10.2004 JP 2004310797
(71) Applicant: OMRON CORPORATION, Kyoto-shi, Kyoto 600-8530 (JP)
(72) Inventor: TAKAMORI, Satoshi, c/o OMRON Corporation, Shiokoji-dori, Kyoto-shi, Kyoto 600-8530 (JP); NISHIDA, Masami, Osaka-shi, Osaka 532-0031 (JP)
(74) Representative: Brykman, Georges
(86) International application number: PCT/JP2005/019570
(87) International publication number: WO 2006/046544

(57) **Abstract**

An excessive rotation preventing structure for a rotation supporting mechanism, which has no torque loss while ensuring thinness in a height direction, is provided. A portable terminal is also provided. The excessive rotation preventing structure is provided with a rotation stopping means. At the time of rotating and stopping a cover supported on a main body by a shaft, at the same open position where the cover is normally or reversely turned 180 degrees in a flat plane direction, the rotation stopping means rotates and stops the cover by moving one locking member to a move control position for open positioning when the cover is rotated in an opening direction and the locking members of the main body and the cover are correspondingly locked at an open position corresponding part.

## Description

### TECHNICAL FIELD

The present invention relates to a rotation supporting mechanism to be used for an open/close portion of a portable terminal such as a portable telephone, an electronic notebook, a digital camera and a digital video camera. More specifically, it concerns an excessive rotation preventing structure of the rotation supporting mechanism, which, when a cover is open-operated in a flat plane direction with the main body and the cover being superposed on each other, can prevent an excessive rotation of the cover.

### BACKGROUND ART

The following description will discuss, for example, a rotation supporting mechanism that supports the superposed faces between the main body and the cover of a portable telephone so as to be opened and closed. In general, with respect to the rotation supporting mechanism of a portable telephone, a middle-bending type rotation supporting mechanism (cover open/close mechanism) has been known in which: a main body and a cover are opened from a superposed state with the main body and the cover being folded into two parts and superposed on each other, in a superposing direction, with a rotation shaft of a rotation supporting unit serving as an open/close fulcrum (for example, see Patent Document 1).

However, in the case when the cover of such a rotation supporting mechanism is operated to open, the user has to support the main body by one hand, while grabbing the cover by the other idle hand, and has to carry out the opening operation, with the result that both of the hands are required to open the cover. For this reason, it is not possible to easily open and close the cover.

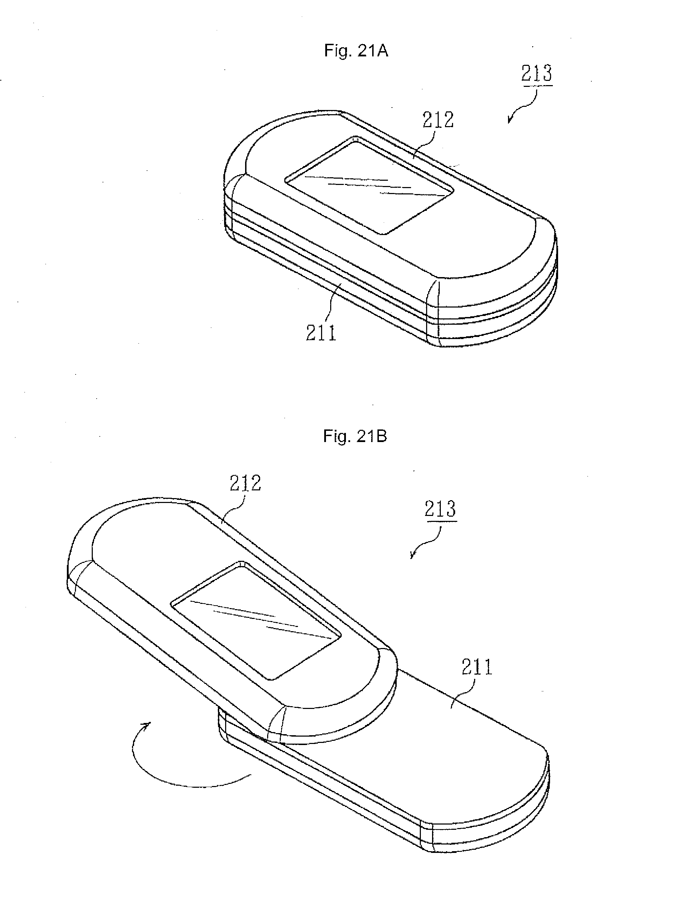

For this reason, as shown in Figs. 21 (A) and 21 (B), a planar open/close type portable telephone 213 has been known in which, from a state where a main body 211 and a cover 212 are superposed on each other, the cover 212 on the upper side in its superposed state is rotated by virtually 180 degrees in the flat plane direction so as to be open-operated.

In the rotation supporting mechanism in which the cover is opened and closed in the flat plane direction in this manner, since the rotation axis is made to stand vertically to cause the structure to become bulky due to the open/close structure of the cover, resulting in difficulty in providing a thinner structure of a portable telephone.

For example, in a hinge device disclosed in Patent Document 2, pivotal members, centered on the hinge, are formed by laminating the constituent members in the hinge axis (height) direction to cause a bulky structure, failing to be applied to a thin-type portable telephone.

Moreover, a hinge structure that allows a comparatively large pressing force of a spring to be exerted in the laminating direction is used for providing a rotation stopping structure that can position a rotation body at a desired position in the rotation direction to stop thereon. In other words, the objective thereof is to stop the rotation of the rotation body at a position where the pivotal operation of the rotation body is stopped. Consequently, since a strong contacting pressure of the spring is exerted between superposed faces of the laminated constituent members, the contact resistance becomes larger, resulting in large torque loss in the rotation operations. Therefore, this structure is not used for applications requiring a smooth rotation, such as a one-touch operation that automatically rotates the rotation body.

Moreover, in a stopping structure which allows the rotation body to stop its rotation at a predetermined open position, an excessive pivot preventing mechanism used for preventing the excessive rotation of the rotation body is installed. However, its structure is complex, and a problem arises in that the constituent members become bulky in the height direction to cause a large structure.

Patent Document 1: Japanese Patent Application Laid-Open No. 2003-28138
Patent Document 2: Japanese Patent Application Laid-Open No. 2004-197862

### DISCLOSURE OF THE INVENTION

### PROBLEMS TO BE SOLVED BY THE INVENTION

Therefore, in an attempt to achieve an excessive rotation preventing structure, the objective of the present invention is to provide an excessive rotation preventing structure for a rotation-supporting mechanism, which can easily achieve a preventing structure for excessive rotation, while ensuring thinness in a height direction without causing a bulky structure, and a portable terminal using such an excessive rotation preventing structure.

### MEANS FOR SOLVING THE PROBLEMS

The present invention relates to an excessive rotation preventing structure for use in a rotation supporting mechanism which, from a closed position with a main body and a cover being superposed on each other, rotates the cover in its superposed state, in a flat plane direction, and stops the rotation at the same open position after the cover has been allowed to freely rotate forwardly or reversely, and the excessive rotation preventing structure is characterized by including: a first engaging member that is attached to an open position corresponding part on the main body side of open position corresponding parts between the main body and the cover that correspond to the open positions at which the cover arrives after the forward or reverse rotation; a second engaging member attached to the open position corresponding part on the cover side; and a rotation stopping means that supports one of the two engaging members in a manner so as to move in the rotation direction of the cover, with the other being secured thereto, and when the cover is rotated in the opening direction so that the two engaging members are correspondingly engaged with each other at the open position corresponding part, allows the one of the engaging members to move to a movement regulating position used for position-adjusting the open position so that the cover is rotation-stopped at the open position.

In accordance with the present invention, with respect to the first engaging member and the second engaging member, one is attached to the main body with the other being attached to the cover so that these are correspondingly engaged with each other at mutual open position corresponding parts. Therefore, when the cover is rotated from the close position to the open position, the engaging member on the cover side is engaged with the engaging member on the main body side at the open position corresponding parts so that the rotation is stopped by the engagement. At this time, one of the engaging members is allowed to move to the movement regulating position used for position-adjusting the open position so that the cover is accurately positioned at the open position, and rotation-stopped.

Here, not only an engaging function used for allowing one of the engaging members to be engaged by the other engaging member, but also a positioning function used for allowing it to slightly move in the rotation direction of the cover so that the cover is accurately rotation-stopped at the open position is prepared; thus, the two functions are prepared. For this reason, only by installing the two engaging members, it is possible to obtain a rotation stopping structure which prevents an excessive rotation of the cover. Moreover, since the excessive rotation preventing structure is obtained only by assembling the two engaging members, the number of parts is reduced and the corresponding engaging process is carried out in a flat plane direction, the structure does not become bulky in a height direction, and it is possible to ensure thinness in the rotation supporting structure and the excessive rotation preventing structure.

Moreover, the open positions of the cover may be set at desired angles, such as 90 degrees and 180 degrees, based upon the close position (0 degree). For example, in the case when the engaging structures serving as the rotation stopping means are formed into right and left symmetrical shapes, the two engaging members carry out the same movements in the right and left symmetrical manner; therefore, whether the cover is rotated leftward or rightward, it can be rotation-stopped accurately at the same open position respectively.

The first engaging member and the second engaging member that form the rotation stopping means have a structure in which one is fixedly attached, with the other being allowed to move; therefore, even when the main body side and the cover side to which these are attached are reversed, the same function can be obtained.

In accordance with another aspect, the present invention relates to an excessive rotation preventing structure for use in a rotation supporting mechanism which, from a closed position with a main body and a cover being superposed on each other, rotates the cover in the superposed state thereof, in a flat plane direction, and stops the rotation at the same open position after the cover has been allowed to freely rotate forwardly or reversely by 180 degrees, and the excessive rotation preventing structure is characterized by including: an eccentric cam that rotates in an eccentric manner in the flat plane direction, and has a close position corresponding part formed at a maximum eccentric rotation position on one of cam faces that have different orientations by 180 degrees after the rotation and an open position corresponding part formed at a minimum eccentric rotation position on the other cam face; pressing means which, with a pressing direction being set to a direction that is the same as the direction in which the two positions of the close position corresponding part and the open position corresponding part that have different orientations from each other by 180 degrees are connected to each other through the axis center of the eccentric cam, presses the cam face of the eccentric cam, and when the pressed portion corresponds to the close position corresponding part on the cam face, increases the pressing load to the eccentric cam and a rotation regulating force to stop the rotation operation of the eccentric cam and consequently to lower the pressing load to the eccentric cam as coming closer to the open position corresponding part side, and increases the rotation regulating force to the eccentric cam when the pressed portion corresponds to the open position corresponding part to stop the rotation operation of the eccentric cam; a first engaging member that is attached to the open position on the main body side of open position corresponding parts between the main body and the cover that correspond to the open positions at which the cover arrives after the forward or reverse rotation by 180 degrees, with one of the eccentric cam and the pressing means being attached to the main body with the other being attached to the cover so as to rotation-support the cover; a second engaging member attached to the open position corresponding part on the cover side; and a rotation stopping means that supports one of the two engaging members in a manner so as to move in the rotation direction of the cover, with the other being secured thereto, and when the cover is rotated in the opening direction so that the two engaging members are correspondingly engaged with each other at the open position corresponding part, allows the one of the engaging members to move to a movement regulating position used for position-adjusting the open position so that the cover is rotation-stopped at the open position.

Here, the eccentric cam refers to a cam that rotates in a flat plane direction in an eccentric manner, and allows its eccentric portions having different amounts of eccentricity to exert a rotation force by a pressing force applied by a pressing means that presses the cam face of the eccentric cam. More specifically, the amount of eccentricity differs depending on eccentric rotation positions of the eccentric cam, and since the pressing load becomes different in proportion to the amount of eccentricity, the maximum eccentric rotation position having a high amount of eccentricity exerts a high pressing load to apply a force for moving toward the minimum eccentric rotation position having a low amount of eccentricity so that the pressing means allows the eccentric cam to generate a rotation force.

Therefore, in the case when the maximum eccentric rotation position having a high pressing load that is rotation-stopped with an increased rotation regulating force is set as a cover close position corresponding part, by only slightly rotating the eccentric cam from this close position corresponding part, the rotation regulation of the eccentric cam is released so that the eccentric cam starts to rotate 180 degrees energetically toward the opening direction. Accordingly, the cover integrally attached to the eccentric cam is automatically rotated by 180 degrees to open. This enables the user to carry out the opening operation through a one-touch operation by slightly pushing the cover by one hand; thus, it becomes possible to improve the opening operability of a portable terminal when this structure is applied to the portable terminal. In contrast, upon returning the cover to the original closed state, the cover is returned to the original state by rotating the cover by 180 degrees by the hand in the reverse rotation direction.

Moreover, in addition to the usage of the circumferential face of the eccentric cam as the cam face, concave grooves or convex stripes used for guiding the pressing means may be formed at least one of the upper and lower faces along the circumferential face, and these concave grooves or convex stripes may be used as the cam face.

The pressing means may be formed by, for example, a spring, and the pressing force of the spring may be correspondingly applied to the cam face of the eccentric cam all the time. For this reason, depending on the corresponding position on the eccentric cam, the pressing force is made different, and depending on the contact angle to the cam face, the rotation direction of the eccentric cam is made different; thus, the eccentric cam is allowed to rotate leftward or rightward.

As described above, by utilizing the pressing force of the pressing means as the rotation force in the cover opening direction, the cover can be automatically rotated from the close position to the open position. Moreover, with respect to the corresponding relationship between the eccentric cam and the pressing means, an engaging structure in which the two members are allowed to be engaged with and released from each other at one point in the rotation direction can be prepared. For example, in the case when a concave section and a pressing roller are made in concave/convex contact with each other, the cover can be accurately positioned at one point of the rotation stop position in which the concave/convex contact is made.

In particular, since the pressing force of the pressing means is exerted as the rotation force from the cover closing direction to the opening direction, by releasing the rotation regulation by slightly rotating the cover from the close position, the cover is allowed to energetically rotate in the opening direction, and stops after rotating 180 degrees. This enables the user to automatically carry out the opening operation through a one-touch operation by slightly pushing the cover by a finger tip of the hand holding the terminal; thus, it becomes possible to improve the opening operability of the cover. In contrast, upon returning the cover to the original close position, the cover is returned to the original state by rotating the cover by 180 degrees by the hand reversely in the closing direction.

As described above, the main body and the cover that are superposed on each other and coupled to each other are designed to relatively rotate through the rotation supporting mechanism. Therefore, the members forming the eccentric can and the pressing means are not only attached to one of the main body side and the other cover side so as to correspond to each other, but also attached in a reversed manner with respect to these attached sides.

In accordance with the present invention, an eccentric cam that rotates in a flat plane direction and is suitable for achieving thinness is adopted, and a pressing means having a low height suitable for achieving thinness, which presses the cam face of the eccentric cam in a flat plane direction, is combined with the eccentric cam. For this reason, the resulting structure does not become bulky in a height direction, and makes it possible to miniaturize the rotation supporting mechanism, and consequently to achieve thinness in a portable terminal or the like.

Moreover, in the case of stopping the cover at the same open position, since the rotation supporting mechanism has a structure having the same portions with right and left symmetrical shapes, the cover is allowed to carry out the same movements from the close position of 0 degree to the open position rotated by 180 degrees in the right and left symmetrical manner, and the cover can be easily operated to open in both of the directions. For this reason, whether the cover is rotated leftward or rightward, it can be rotation-stopped accurately at the same open position respectively.

Moreover, in the pressing means that presses the cover in the rotation direction also, since the pressing operation is carried out perpendicularly to the shaft-supporting direction of the cover, the pressing direction and the rotation direction are respectively the same directions that are perpendicular to the shaft-supporting direction of the cover; therefore, the contact resistance on the upper and lower faces of the eccentric cam having a laminated structure in the shaft supporting direction is made smaller, making it possible to minimize torque loss. Moreover, upon carrying out an engaging operation at the cover open position, in addition to making the above-mentioned concave section of the eccentric cam in concave/convex contact with the pressing roller or the like, an accurate positioning process is carried out by using the rotation stopping means in which two engaging members are correspondingly engaged with each other so that it becomes possible to further prevent excessive rotation of the cover.

In accordance with still another aspect of the present invention, the rotation stopping means is provided with a rotation stopping lever one end of which serves as a rotation fulcrum, with the other end being shaft-supported thereon so as to freely rotate in the rotation direction of the cover, and an angle regulating unit that regulates the pivotal angle of the rotation stopping lever so that one of the rotation stopping lever and the angle regulating unit is attached to the open position corresponding part on the main body side at which the main body and the cover are allowed to correspond to each other, with the other being attached to the close position corresponding part on the cover side.

The rotation stopping lever is allowed not to pivot centered on the rotation axis of the cover, but to pivot in a small range with the rotation center being positioned on another position. For this reason, this is compactly assembled into either one of the main body and the cover, and only when the cover is rotated leftward or rightward to reach the open position corresponding part, the rotation stopping lever is regulated by the angle regulating unit to be engaged with each other so that the positioning processes corresponding to both of the rotation directions can be carried out.

Therefore, the amount of pivotal movement can be regulated in such a manner that, with one end of the rotation stopping lever being set as a pivot fulcrum, the other end thereof is allowed to pivot like a wiper only within the pivot area corresponding to the positioning angle. For example, when the cover is rotated leftward, in cooperation with the leftward rotation, the rotation stopping lever is rotated leftward to an extent corresponding to the amount of positioning rotation so that the rotation is regulated. In the same manner, when the cover is rotated rightward, in cooperation with the rightward rotation, the rotation stopping lever is rotated rightward to an extent corresponding to the amount of positioning rotation so that the rotation is regulated; thus, the cover is accurately positioned at the same open position.

In accordance with the rotation stopping means of the present invention, upon operating the cover to open, the cover is rotation-regulated to a fixed open position by the rotation stopping lever that has received the rotation force of the cover and the corresponding regulating action in cooperation with the angle regulating unit so that the excessive rotation of the cover is regulated.

In accordance with still another aspect of the present invention, the rotation stopping means is provided with a slider that is supported in a manner so as to slide in the rotation direction of the cover and a slide regulating unit that regulates the sliding position of the slider, and one of the slider and the slide regulating unit is attached to the open position corresponding part on the main body side, with the other being attached to the open position corresponding part on the cover side.

The sliding direction of the slider is preliminarily designed to slide in the same direction as that of the rotation of the cover in cooperation therewith, and when the cover is rotated leftward, the slider is allowed to slide leftward to an extent corresponding to the amount of positioning rotation of the slider in cooperation with its leftward rotation so that the rotation is regulated. In the same manner, when the cover is rotated rightward, the slider is allowed to slide rightward to an extent corresponding to the amount of positioning rotation so that the rotation is regulated; thus, the cover is always accurately positioned at the open position.

In accordance with the rotation stopping means of the present invention, when the cover is rotation-operated in the opening direction to come closer to the open position corresponding part, the slider is allowed to slide to the slide regulating portion in cooperation with the rotation operation of the cover. Thus, the cover, which is slide-regulated by the slide regulating portion, is rotation-regulated to the predetermined open position, thereby regulating the excessive rotation of the cover.

In the case when a portable terminal provided with such an excessive rotation preventing structure for the rotation supporting mechanism is used, since the excessive rotation of the cover at the cover open position can be prevented, the cover can be accurately rotation-stopped at the predetermined open position. Therefore, the user is allowed to operate the cover of a portable terminal to open accurately at the open position in a stable manner. Moreover, even when such an excessive external force as to add an excessive rotation force beyond the open position is applied, the cover is free from wobbliness and positional deviations, thereby making it possible to provide a portable terminal with high reliability.

With respect to the portable terminal, examples thereof include a portable telephone that is constituted by a main body and a cover and supported by a rotation supporting mechanism to be open/close operated and a portable apparatus, such as an electronic notebook, a digital camera and a digital video camera.

### EFFECTS OF THE INVENTION

In accordance with the present invention, it is possible to obtain a rotation supporting structure with high reliability, in which, whether the cover is rotated leftward or rightward, the cover is accurately positioned and rotation-stopped at the same open position, while preventing the excessive rotation of the cover at the open position.

### BRIEF DESCRIPTIONS OF THE DRAWINGS

Fig. 1 is a perspective outside drawing that shows a closed state of a portable telephone in accordance with embodiment 1.
Fig. 2 is a perspective view that shows a mutual coupling relationship between a main body and a cover shown in embodiment 1.
Figs. 3A and 3B are perspective views that show a state in which the cover is operated to rotate to the right in embodiment 1.
Figs. 4A and 4B are perspective views that show a state in which the cover is operated to rotate to the left in embodiment 1.
Fig. 5 is an enlarged perspective view that shows an essential portion of a rotation supporting mechanism of embodiment 1.
Fig. 6 is an exploded perspective view that shows the rotation supporting mechanism of embodiment 1.
Fig. 7 is a perspective outside drawing that shows a mutual relationship between an eccentric cam and a pressing roller in a stand-by state in embodiment 1.
Figs. 8A and 8B are a perspective view from above and a plan view that show the eccentric cam of embodiment 1 in an enlarged manner.
Fig. 9 is a perspective view that shows a state in which the rotation supporting mechanism starts to rotate to the right in embodiment 1.
Fig. 10 is a perspective view that shows a state in which the eccentric cam starts to rotate to the right in embodiment 1.
Fig. 11 is a perspective view that shows an opened state in which the eccentric cam has been rotated by 180 degrees in embodiment 1.
Fig. 12 is a perspective view that shows an excessive rotation preventing state in which a coupling pin integral with the eccentric cam is rotated to the left in embodiment 1.
Fig. 13 is a perspective view that shows an opened state in which the eccentric cam has been rotated to the right by 180 degrees in embodiment 1.
Fig. 14 is a perspective view that shows an excessive rotation preventing state in which a coupling pin integral with the eccentric cam is rotated to the right in embodiment 1.
Fig. 15 is a perspective view that shows a rotation supporting mechanism of embodiment 2.
Fig. 16 is an exploded perspective view that shows the rotation supporting mechanism of embodiment 2.
Fig. 17 is a perspective view that shows a stand-by state of the rotation supporting mechanism in a closed position in embodiment 2.
Fig. 18 is a perspective view that shows a sliding state of a positioning slider in embodiment 2.
Figs. 19A and 19B are plan views that explain a state immediately before a sliding process in a state where a coupling pin integral with the eccentric cam has been rotated to the right in embodiment 2.
Figs. 20A and 20B are plan views that explain an excessive rotation preventing state after the sliding process in a state where the coupling pin integral with the eccentric cam has been rotated to the right in embodiment 2.
Figs. 21A and 21 B are perspective views that show a state in which the cover of a conventional portable telephone is operated to open.

### REFERENCE NUMERALS

- 11 ...: Portable telephone
- 12 ...: Main body
- 13 ...: Cover
- 14, 151 ...: Rotation supporting mechanism
- 15, 152 ...: Base
- 18, 155 ...: Pressing roller
- 20 ...: Rotation stopping lever
- 22, 158 ...: Eccentric cam
- 24c, 160c ...: Coupling pin
- 32 ...: Close corresponding concave section
- 33 ...: Open corresponding concave section
- 35a, 35b ...: Angle regulating face
- 157 ...: Positioning slider
- 162a, 162b ...: Slide regulating face

### BEST MODE FOR CARRYING OUT THE INVENTION

In an attempt to automate an opening operation of a cover, a planar rotation supporting mechanism suitable for a thinner structure and a planar excessive rotation preventing structure suitable for the planar rotation supporting mechanism are prepared so that the cover is desirably open/close operated.

### Embodiment 1

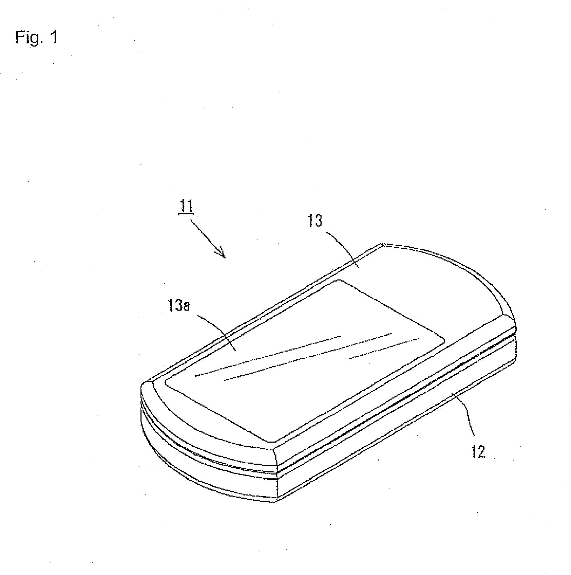

Referring to attached drawings, the following description will discuss one embodiment of the present invention.
These Figures show a portable telephone of a horizontal rotation type, and in Fig. 1, this portable telephone 11 of the horizontal rotation type has a horizontal rotation structure in which: a rectangular plate shaped main body 12 and a cover 13 of the same shape are superposed on each other so as to be opened and closed in a flat plane direction, and the cover 13 in its superposed state is rotated in the flat plane direction so as to be open/close operated.

The outside surfaces, such as upper surfaces and side faces of the main body 12 and the cover 13, are equipped with a display device, not shown, used for utilizing various pieces of electronic information including telephone information and electronic mails, an input device and an antenna.

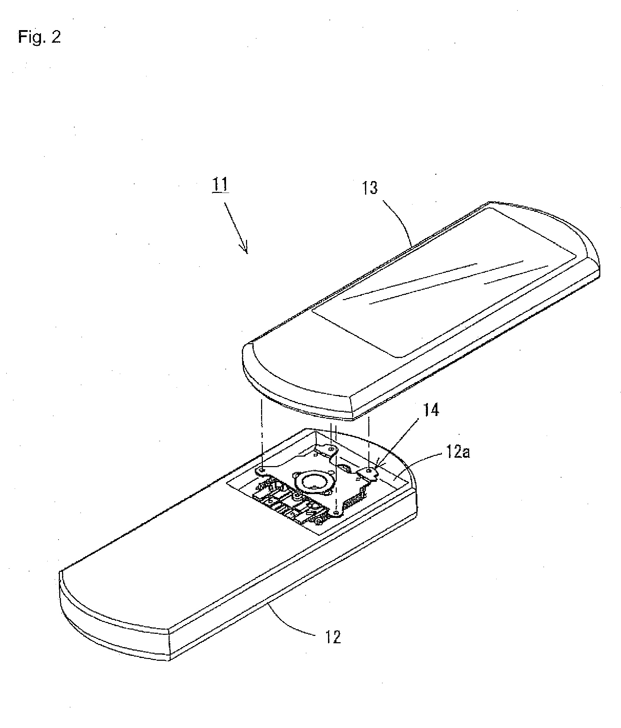

As shown in Fig. 2, upon coupling the cover 13 to the main body 12, the cover 13 on the upper side is coupled to the main body 12 on the lower side in a manner so as to be rotatable in the flat plane direction through a rotation supporting mechanism 14.

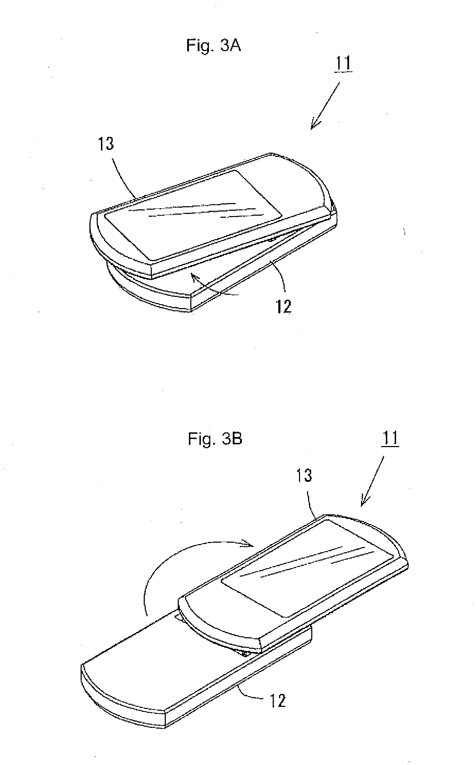

Upon rotating the cover 13 in the flat plane direction, as shown in Fig. 3(A), when the side face of the closed cover 13 is pushed with a finger tip to slightly shift leftward, the positional regulation of the rotation supporting mechanism 14 is released in cooperation with this movement. Thus, a rotation force is exerted on the cover 13 in the opening direction so that, as shown in Fig. 3(B), the cover 13 is allowed to automatically rotate in the opening direction to open. With this arrangement, the rotation is stopped in a state in which the main body 12 and the cover 13 are longitudinally stretched linearly.

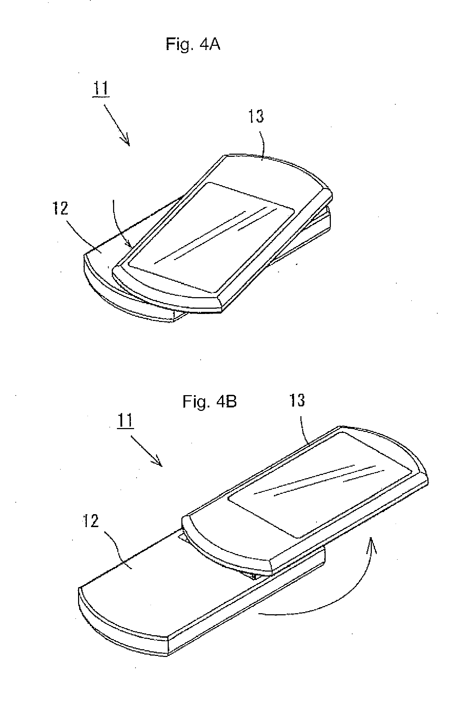

In the same manner, as shown in Fig. 4(A), when the side face of the cover 13 is pushed with a finger tip to slightly shift rightward, a rotation force is generated in the rotation supporting mechanism 14, which will be described later, in the opening direction in cooperation with this movement; thereafter, as shown in Fig. 4(B), the cover 13 is allowed to rotate in the same direction to open.

The rotation supporting mechanism 14 is provided with a right and left symmetrical supporting mechanism of a horizontally rotation type provided with a rotation force applying function used for rotating and stopping the cover 13 from the closed position serving as a reference rotation position of 0 degree to an open position of 90 degrees as well as to an open position of 180 degrees.

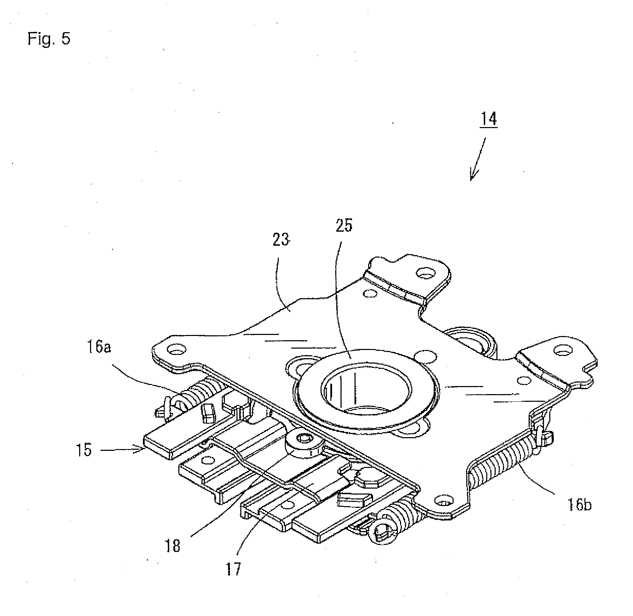

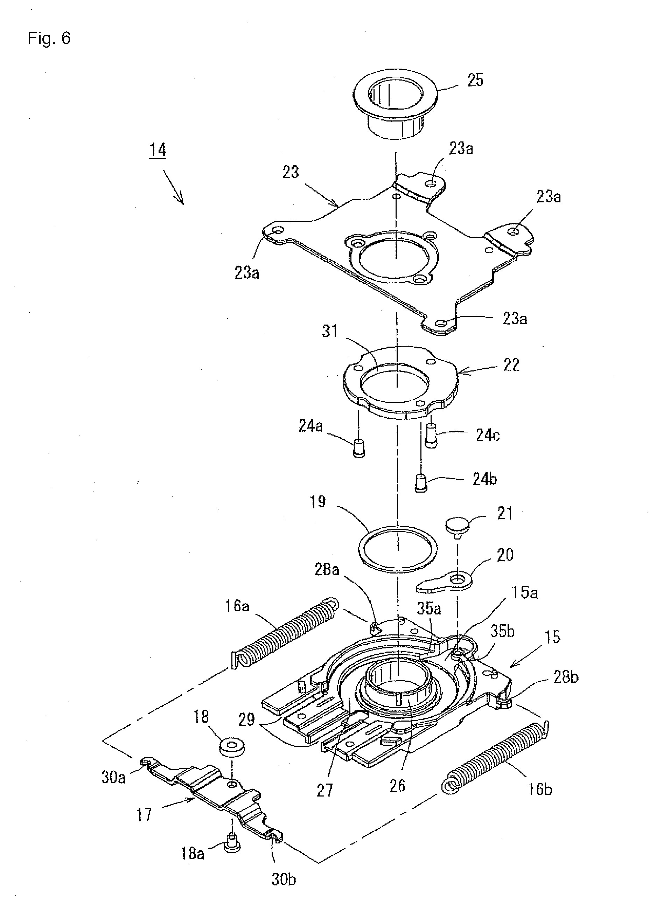

As shown in Figs. 5 and 6, the supporting mechanism has a structure in which on the upper surface of a base 15, parallel springs 16a and 16b, a slider 17, a pressing roller 18, an elastic ring 19, a rotation stopping lever 20, a fulcrum pin 21 for the lever, an eccentric cam 22 and a plate 23 are mounted. In particular, among these members, the eccentric cam 22 and the plate 23, which correspond to rotation main parts, are superposed longitudinally on each other, with the respective opposing faces being integrally coupled to each other through coupling pins 24a, 24b and 24c, and caulked and secured onto the base 15 by caulking cylinders 25 in a manner so as to rotate thereon.

The base 15, which has a square plate shape, is integrally secured onto a concave section 12a (see Fig. 2) formed on one side of the upper surface of the main body 12 in a recessed state therein. A shaft-supporting cylinder 26, a round guide groove 27, spring stopping portions 28a and 28b and a slide guide rail 29 are formed on the upper face of the base 15, and the above-mentioned respective parts are attached to these.

First, in the shaft supporting cylinder 26, a cylinder member is attached to the center of the upper surface of the base 15 in a manner so as to protrude with a short height, and a caulking cylinder 25 is inserted and guided on the inner circumferential face of the shift supporting cylinder 26; thus, an eccentric cam 22 and a plate 23, which will be described later, are shaft-supported on the outer circumferential face so as to freely rotate thereon.

A round guide groove 27 having a concave shape in its cross-section is formed on the periphery forming a concentric circle of the shaft supporting cylinder 26, and the lower end portion of the coupling pin 24c, which will be described later, is interposed in the round guide groove 27 so as to freely pivot therein to serve as a position-determining engaging member. Furthermore, the spring stopping portions 28a and 28b are formed in a protruding manner on one end side of the right and left sides of the base 15 centered on the shaft supporting cylinder 26, and one end of each of the parallel springs 16a and 16b that will be described later is connected to this portion. A slide guide rail 29 is formed on the other end side of the base 15, and a slider 17, which will be described later, is slide-guided thereto.

Next, the following description will discuss the parallel springs 16a and 16b. The parallel springs 16a and 16b, which have the same shape, are placed on the two sides of the base 15 in parallel with each other, and have a thin elongated coil shape so as to be shrinkably expanded linearly, with one end to be shrinkably expanded being engaged and stopped by each of the spring stopping portions 28a and 28b, with the other end being engaged and stopped by each of the spring stopping portions 30a and 30b of the slider 17, which will be described later.

Moreover, a tensile action is exerted on the other end of each of the parallel springs 16a and 16b based upon a reference position in shrinkable expansion formed by the spring stopping portions 28a and 28b on the base 15. With this arrangement, the slider 17 on the other end side is allowed to have a set pressing force in the same direction as the tensile direction of the parallel springs 16a and 16b so that pressing operations are carried out toward the eccentric cam 22.

The above-mentioned slider 17 has a concave/convex face for use in slide-guiding formed laterally on a laterally elongated member. Moreover, the spring stopping portions 30a and 30b are formed on two end members 17a and 17b of the slider 17. The other end of each of the parallel springs 16a and 16b is engaged with each of the spring stopping portions 30a and 30b so that the slider 17 is pulled in the pressing direction, and allowed to slide in an expansion/contraction direction of the springs 16a and 16b.

Moreover, on the upper face of the base 15 facing two end members 17a and 17b of the slider 17 in the sliding direction, slide guide rails 29, which allow the corresponding concave/convex faces of the slider 17 to be made in contact therewith and slide-supported thereon, are formed so that the slider 17 is slide-guided in a stable manner.

Moreover, in the center portion of the slider 17, a pressing roller 18 is shaft-supported by a pin 18a so as to freely rotate thereon in a flat plane direction. This pressing roller 18, which is positioned in the center of the slider 17, always presses the eccentric cam 22, which will be described later, by one point on the outer circumferential face of the pressing roller 18.

On the lower face in the center portion of the slider 17 in the sliding width direction, the lower end portion of the pin 18a that shaft-supports the pressing roller 18 is formed so as to stick out to serve as a slide guiding member. The lower end portion of the pin 18a is engaged with the concave groove shaped slide guide rail 29 formed on the upper face of the base 15 along the sliding direction; thus, the lower end portion of the pin 18a in the center portion of the slider 17 is utilized as the slide-guide shaft so that the slide guiding process is carried out. These slide guiding functions make it possible to smoothly slide the slider 17 in the pressing direction.

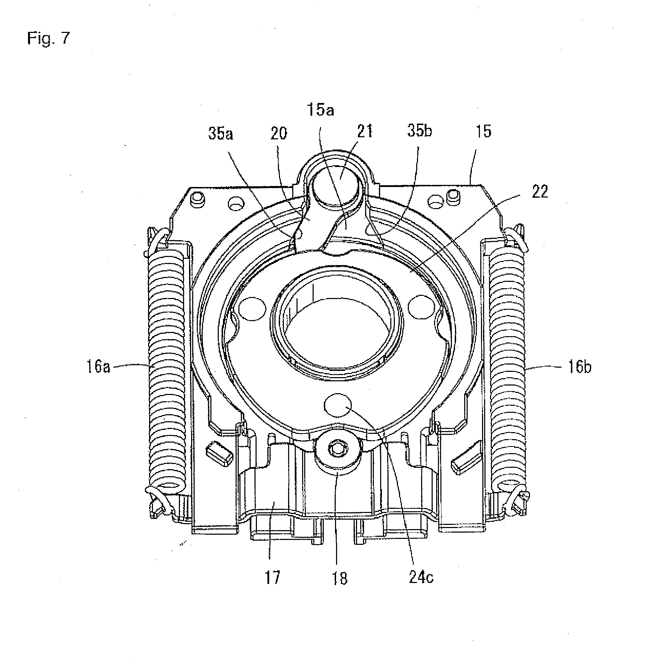

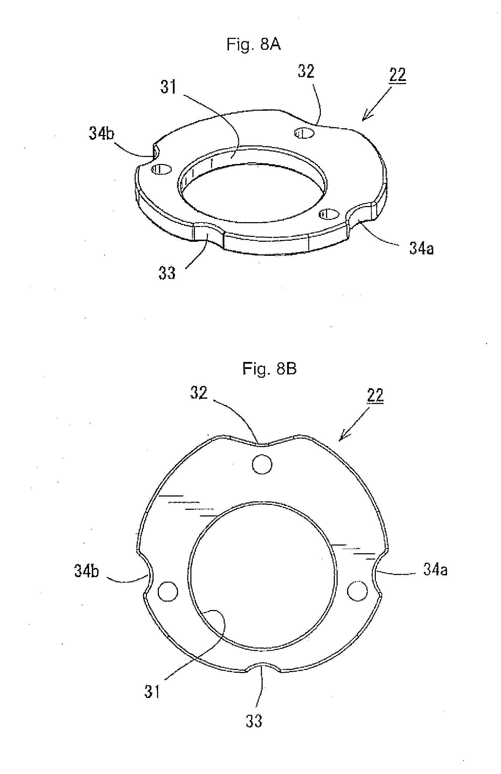

As shown in Figs. 7 and 8, the above-mentioned eccentric cam 22 has an elliptical plate shape, with a shaft hole 31 through which the shaft supporting cylinder 26 is inserted so as to freely rotate therein being formed in the center portion thereof. Moreover, this is allowed to rotate centered on the shaft hole 31 in an eccentric manner, and provided with a close-corresponding concave section 32 that is used for receiving the roller face of the pressing roller 18, and placed on a maximum eccentric rotation position that has the greatest amount of eccentricity on one of the outer circumferential faces that have different orientations from each other by 180 degrees, and an open-corresponding concave section 33 that is used for receiving the roller face of the pressing roller 18, and placed on a minimum eccentric rotation position that has the smallest amount of eccentricity on the other outer circumferential face having the different orientation by 180 degrees. In addition to these, a left intermediate corresponding concave section 34a and a right intermediate corresponding concave section 34b, which are used for stopping the rotation at 90 degrees in the middle of the rotation, are formed on the outer circumferential face of the eccentric cam 22.

In this case, when a convex shaped roller face of the pressing roller 18 that protrudes with an arc shape is made in concave/convex contact with the close-corresponding concave section 32 having a greater amount of eccentricity of the eccentric cam 22, the spring pressure becomes higher to increase a pressing load and a rotation-regulating force to the eccentric cam 22 so that the rotation of the eccentric cam 22 is regulated. As a result, at the time when the pressing roller 18 has been made in concave/convex contact with the close-corresponding concave section 32 of the eccentric cam 22, the rotation of the eccentric cam 22 is stopped.

Moreover, upon rotation of the eccentric cam 22, as the pressing roller 18 is coming closer from the close-corresponding concave section 32 toward the open-corresponding concave section 33, the amount of eccentricity of the eccentric cam 22 becomes smaller; therefore, the pressing load to the eccentric cam 22 becomes lower. Then, when the pressing roller 18 has been made in concave/convex contact with the open-corresponding concave section 33, the amount of eccentricity of the eccentric cam 22 becomes smaller to make the spring pressure weaker, thereby also making the pressing load to the eccentric cam 22 weaker; however, since the rotation regulating force derived from the mutual concave/convex contact is high, the rotation of the eccentric cam 22 is regulated. For this reason, when the pressure roller 18 has been made in concave/convex contact with the open-corresponding concave section 33 of the eccentric cam 22, the rotation of the eccentric cam 22 is stopped.

When the pressing roller 18 is made in concave/convex contact with the open-corresponding concave section 32 or the close-corresponding concave section 33, the movement of the pressing roller 18 is allowed to proceed or retract in the pressing direction integrally with the slider 17 to exert a pressing force toward the center of the eccentric cam 22. For this reason, the eccentric cam 22, received this pressing force, has an increased rotation regulating force, with the result that loads, imposed on the rotation directions on the two sides, are balanced with each other, thereby maintaining balanced pressing forces. As a result, no rotation force is exerted on the eccentric cam 22 at the corresponding contact positions of the corresponding concave sections 32 and 33.

Moreover, in the above-mentioned right and left intermediate corresponding concave sections 34a and 34b also, when a convex shaped portion of the pressing roller 18 that protrudes with an arc shape is made in concave/convex contact with each of these right and left intermediate corresponding concave sections 34a and 34b, the rotation of the eccentric cam 22 is stopped at an open position with an angle of 90 degrees, in the same manner.

Furthermore, the above-mentioned coupling pins 24a to 24c are allowed to penetrate the eccentric cam 22 on the peripheral portion of the shaft hole 31 so that the upper end portions thereof stick out from the upper face, and the plate 23, which will be described later, is superposed on the coupling pins 24a to 24c from above so as to be integrally coupled thereto.

The plate 23, which is integrally coupled to the eccentric cam 22, has coupling holes 23a that are opened in the four corners of the plate 23, and the coupling holes 23a are secured to coupling pins, not shown, of the cover 13, and integrally attached to the cover 13 so that the main body 12 and the cover 13 are integrally coupled to each other. Here, the cover 13 is allowed to integrally rotate together with the eccentric cam 22 and the plate 23 centered on the shaft-supporting cylinder 26 on the base 15 attached to the main body 12 so that the cover 13 is rotated to the left or to the right in a flat plane direction.

The caulking cylinder 25 is inserted to the inner circumferential face side of the shaft-supporting cylinder 26, and the upper and lower end portions from the plate 23 on the upper portion to the base 15 on the lower portion are caulked and secured so as to be coupled with each other, with the eccentric cam 22 being allowed to rotate therein.

Here, when the eccentric cam 22 integrally attached to the cover 13 is rotated by 180 degrees, the eccentric cam 22 tries to rotate beyond the open-corresponding concave section 33, and in order to prevent this excessive rotation of the eccentric cam 22, the rotation supporting mechanism 14 is internally provided with an excessive rotation preventing structure.

The excessive rotation preventing structure is configured by a rotation stopping lever 20, a coupling pin 24c and angle regulating faces 35a and 35b. The rotation stopping lever 20 has its one end shaft-supported onto the open position corresponding part of the base 15 through a fulcrum pin 21 so as to freely pivot thereon, with the other end being allowed to freely pivot in the pivotal direction of the eccentric cam 22.

In this case, the amount of pivotal movement of the rotation stopping lever 20 is regulated by a cut-out concave section 15a having an arrow point shape, formed on the upper face of the base 15. In other words, the cut-out end face on the left side of the arrow point shape is formed into an angle regulating face 35a in the left rotation direction, and the cut-out end face on the right side of the arrow point shape is formed into an angle regulating face 35b in the right rotation direction.

Here, the eccentric cam 22 is engaged with the rotation stopping lever 20 of the base 15 on an open position corresponding part, and on this open position corresponding part side of the eccentric cam 22, the lower end portion of the coupling pin 24c is placed on the lower face of the open position corresponding part of the eccentric cam 22 so as to extend perpendicularly downward to be used for positioning.

When the eccentric cam 22 is rotated in the opening direction so that the rotation stopping lever 20 and the coupling pin 24c are correspondingly engaged with each other at the open position corresponding part, the rotation stopping lever 20 is further pushed in the rotation direction of the eccentric cam 22 to rotate so that the rotation stopping lever 20 is made in contact with one of the angle regulating faces 35a and 35b for use in open-positioning; thus, the eccentric cam 22 is accurately rotation-regulated to the open position of 180 degrees.

In this case, since the rotation supporting mechanism 14 has a right and left symmetrical structure, the eccentric cam is rotated in the same right and left symmetrical movements from the close position of 0 degree to the open position of 180 degrees so that the cover 13 integrally attached to the eccentric cam 22 is easily operated to open in both of the directions. Thus, whether the cover 13 is rotated leftward or rightward, it can be rotation-stopped at the same open position accurately with a rotation angle of 180 degrees respectively.

Moreover, with respect to parallel springs 16a and 16b that press the cover 13 in the rotation direction, since the pressing force is applied in a horizontal direction that is perpendicular to the shaft supporting direction of the cover 13, the contact resistance on the upper and lower faces of the eccentric cam 22 having a laminated structure in the shaft supporting direction is made smaller, making it possible to minimize torque loss. Moreover, upon carrying out an engaging operation at the cover open position, in addition to making the above-mentioned corresponding concave sections 32 and 33 of the eccentric cam 22 in concave/convex contact with convex faces of the pressing roller 18, an accurate positioning process is carried out by using the rotation stopping structure in which the rotation stopping lever 20 and coupling pin 24c are correspondingly engaged with each other, while being position-regulated by the angle regulating faces 35a and 35b; thus, it becomes possible to further prevent excessive rotation of the cover.

Moreover, the rotation stopping lever 20 is allowed not to pivot centered on the shaft-supporting cylinder 26 of the eccentric cam 22, but to pivot in a small range with the rotation center being positioned on the open position corresponding part of the base 15 that is different from the shift-supporting cylinder. For this reason, these are compactly assembled into the base 15, and only when the eccentric cam 22 is rotated leftward or rightward to reach the open position corresponding part having 180 degrees respectively, the rotation stopping lever 20 is regulated by the angle regulating faces 35a and 35b and engaged so that the positioning processes corresponding to both of the rotation directions can be carried out.

Therefore, the amount of pivotal movement can be regulated in such a manner that, with one end of the rotation stopping lever 20 being set as a pivot fulcrum, the other end thereof is allowed to pivot like a wiper only within the pivot area corresponding to the positioning angle. For example, in an attempt to allow the eccentric cam 22 to rotate leftward, at an angle close to 180 degrees, in cooperation with a leftward rotation of the eccentric cam 22, the rotation stopping lever 20 is further rotated leftward to an extent corresponding to the amount of positioning rotation of the rotation stopping lever 20 so that the rotation is regulated. In the same manner, in an attempt to allow the eccentric cam 22 to rotate rightward, at an angle close to 180 degrees, in cooperation with a rightward rotation of the eccentric cam 22, the rotation stopping lever 20 is further rotated rightward to an extent corresponding to the amount of positioning rotation of the rotation stopping lever 20 so that the rotation is regulated; thus, the cover is accurately positioned at the same open position of 180 degrees. With this arrangement, the eccentric cam 22 is rotation-regulated to a fixed open position, and the excessive rotation of the eccentric cam 22 is regulated.

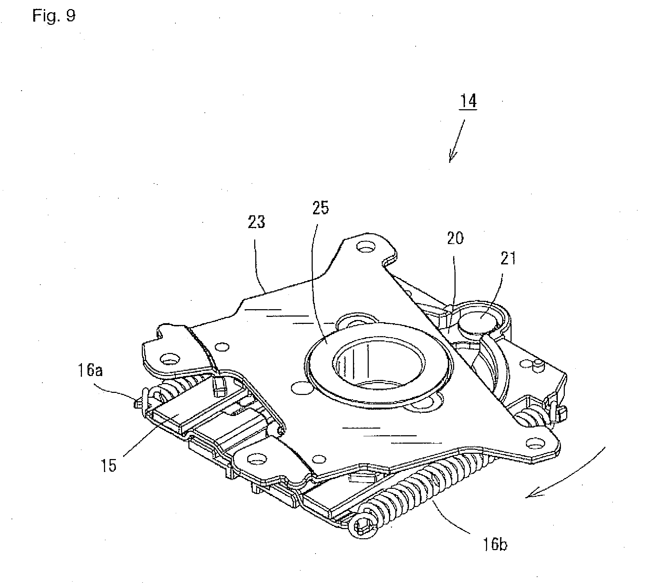

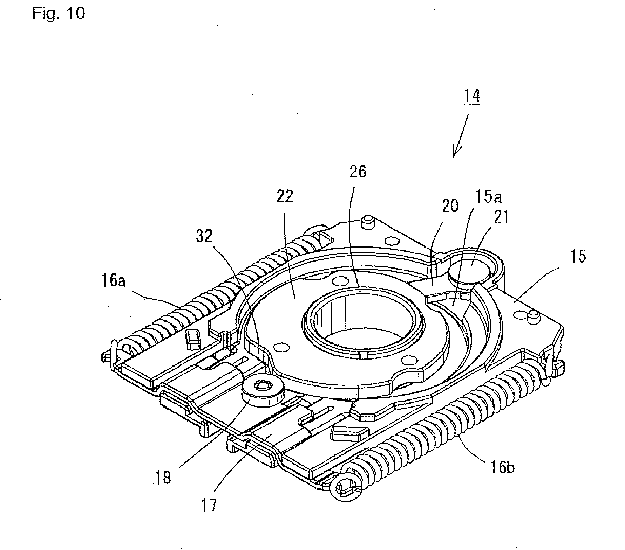

Referring to operation explanatory drawings of Figs. 9 to 12, the following description will discuss opening and closing operations of the rotation supporting mechanism 14 having the above-mentioned structure.
Normally, in the stand-by state of the portable telephone 11, it is kept in a closed state (see Fig. 1) with the main body 12 and the cover 13 being closed and superposed on each other. In the case when the user holds the portable telephone 11 in this closed state by one hand, by slightly pressing the cover 13 with a finger tip of the hand holding the telephone to be shifted, for example, in the rightward plane direction (see Fig. 3), the plate 23 of the rotation supporting mechanism 14 is slightly rotated in the same rightward direction, as shown in Fig. 9. At this time, as shown in Fig. 10, the eccentric cam 22 is also slightly rotated rightward, and the concave/convex contact state between the rotation roller 18 and the close corresponding concave section 32 is released so that the eccentric cam 22 is allowed to rotate rightward slightly.

In this case, the concave/convex contact state of the eccentric cam 22 between the close corresponding concave section 32 and the pressing roller 18 is slightly offset with the result that the fitted state at the mutual closed positions is offset. For this reason, the eccentric cam 22 starts to rotate rightward energetically in a manner so as to avoid the pressing force of the pressing roller 18 applied thereto with a high load, and when the eccentric cam 22 has been rotated from the close corresponding concave section 32 by 90 degrees, the right intermediate corresponding concave section 34b and the pressing roller 18 are made in concave/convex contact with each other. At the time when this concave/convex contact is made, the cover 13 integrally attached to the eccentric cam 22 is rotation-regulated to a lateral position of 90 degrees, with the pressing pressures being kept in a well-balanced state, so that the rotation is stopped.

When the cover 13 is further rotated rightward from this position, the eccentric cam 22 starts rotating rightward, and the eccentric cam 22 is allowed to rotate from the right intermediate corresponding concave section 34b to the open corresponding concave section 33.

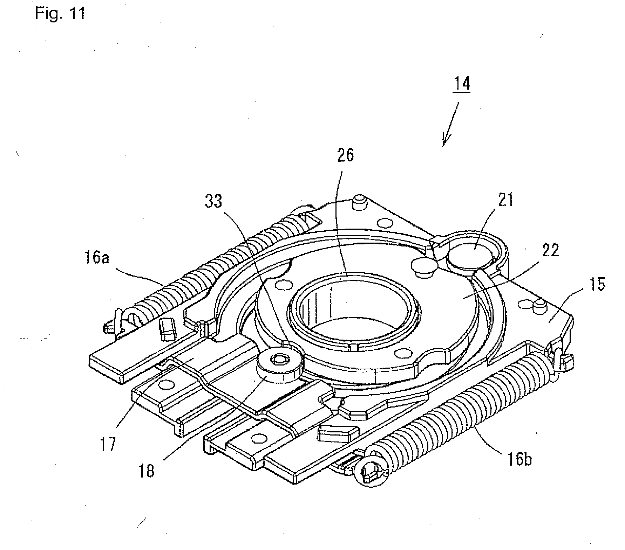

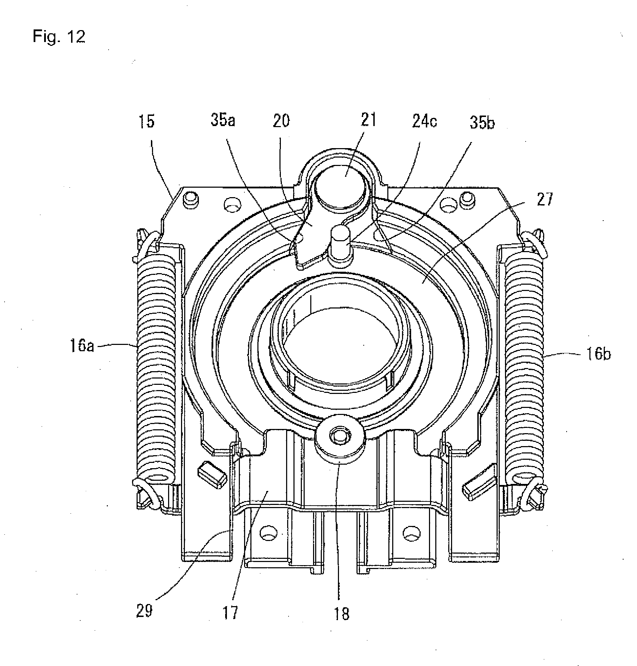

As shown in Fig. 11, when the eccentric cam 22 has been rotated by 180 degrees, the open corresponding concave section 33 and the pressing roller 18 are made in concave/convex contact with each other, and at the time when this concave/convex contact is made, the eccentric cam 22 is rotation-regulated, with the pressing pressures being kept in a well-balanced state, so that the rotation is stopped. Upon highly energetic rotation operation of the eccentric cam 22 at this time, as shown in Figs. 11 and 12, the cover 13 integrally attached to the eccentric cam 22 is energetically rotated by 180 degrees so that the cover 13 is automatically open-operated. Because of the right and left symmetrical structure, this opening operation is carried out not only on the rightward rotation, but also on the leftward rotation in the same manner.

In this manner, by setting the maximum eccentric rotation position with a high pressing load at the close corresponding concave section 32 of the cover 13, the eccentric cam 22 is allowed to energetically rotate 180 degrees only by slightly rotating the eccentric cam 22 from the close corresponding concave section 32. In accordance with this mechanism, by initially rotating the cover 13 integrally attached to the eccentric cam 22 through a manual operation, the succeeding operation is automatically carried out to rotation-stop at each of the rotation positions of 90 degrees and 180 degrees so that the cover 13 is opened. For this reason, the user can carry out an opening operation through a one-touch process by slightly pressing the cover 13 by one hand so that the opening operability of the portable telephone 11 is improved.
In contrast, when the cover 13 is returned to the original closed state, the cover 13 is rotated with the hand by 90 degrees or 180 degrees in the reversed rotation direction to return it to the original state.

The following description will discuss the rotation regulating operation of the cover 13 used for regulating excessive rotation when the cover 13 is open-operated by rotating it by 180 degrees. When the cover 13 is in the closed state, the rotation stopping lever 20 is in an idle state with no load applied thereto, and in a stand-by state for rotation. When the eccentric cam 22 is slightly rotated leftward in response to a rotation operation of the cover 13 from this stand-by state, the coupling pin 24c integrally formed with the eccentric cam 22 is also rotated, and when the coupling pin 24c is rotated by 180 degrees, the coupling pin 24c slightly presses the rotation stopping lever 20 to rotate so that the rotation stopping lever 20 is made in contact with the angle regulating face 35a on the left side, and rotation-regulated.

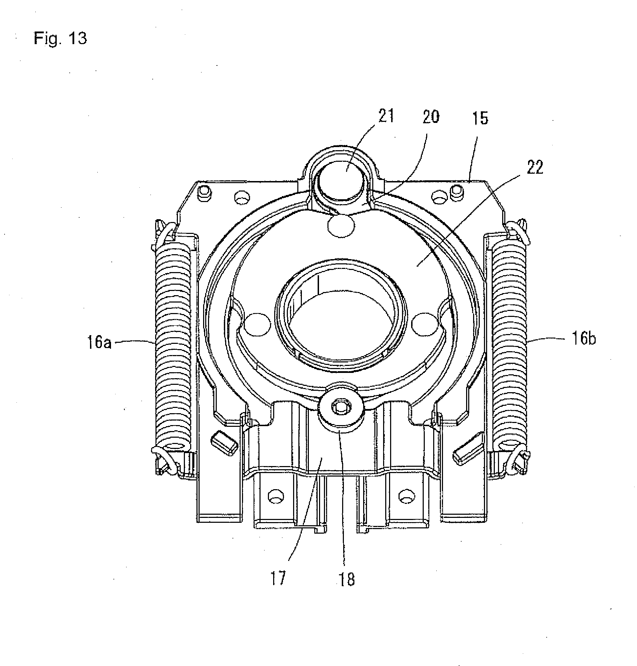

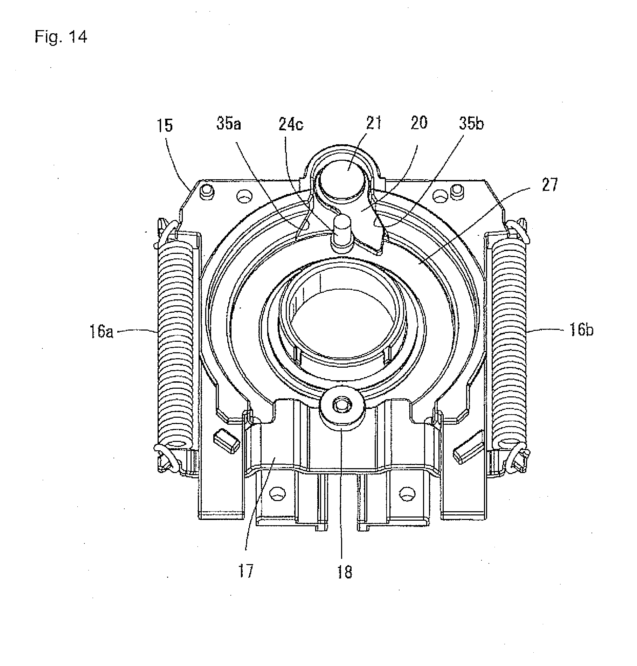

For this reason, when the cover 13 is open-operated by rotating it leftward by 180 degrees, the exceeding leftward rotation is regulated to maintain the open position. Thus, it becomes possible to regulate an excessive rotation operation of the cover 13. Here, when the cover 13 is reversely rotated by 180 degrees, it is returned to its original position. In the same manner, as shown in Figs. 13 and 14, when the cover 13 is open-operated by rotating it rightward, it also becomes possible to regulate the excessive rotation operation of the cover 13 in the same manner, because of its right and left symmetrical structure.

Moreover, since the respective amounts of rightward and leftward rotations can be regulated to 180 degrees, the inner wiring is also regulated in its movements within a rotation range of 180 degrees or less, with the result that the inner wiring is made free from an excessive twisting action. Therefore, even if the cover is frequently open/close-operated, the wiring is maintained in a stable manner.

Moreover, between opposing faces that longitudinally face each other of the plate 23 attached to the cover 13 and the base 15 attached to the main body 12, the aforementioned elastic ring 19 is interposed so as to absorb variations in the upward and downward directions. The elastic ring 19 is made from rubber, metal or the like, and any of these may be used as long as it exerts an elastic property in the upward and downward directions; thus, by interposing the elastic ring 19, the contact stability of the cover 13 can be improved, and wobbliness of the cover 13 can be restrained.

### Embodiment 2

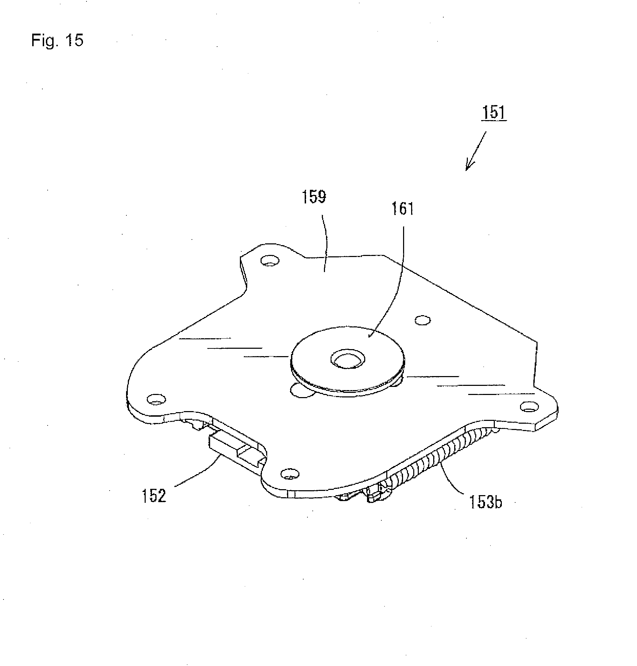

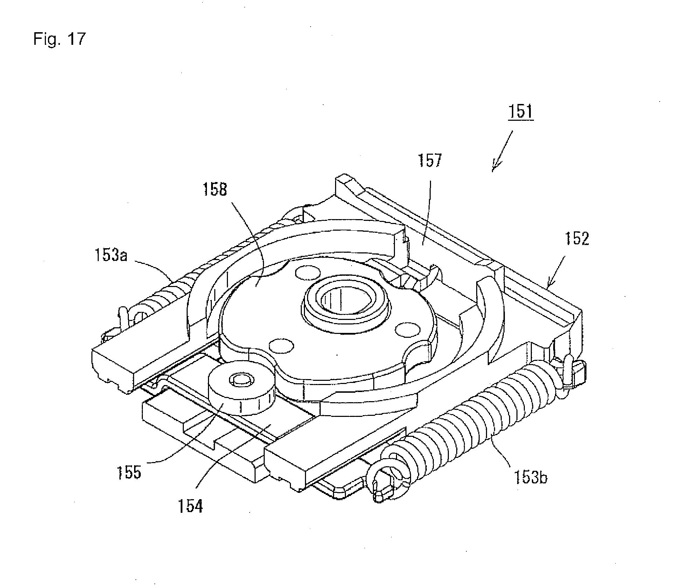

Figs. 15 to 17 show a rotation supporting mechanism 151 relating to another embodiment, and this rotation supporting mechanism is different from the rotation supporting mechanism 14 of the aforementioned embodiment 1 only in its excessive rotation preventing structure, and since the other structures are the same, only the different excessive rotation preventing structure will be explained.

First, the rotation supporting mechanism 151 has a structure in which on the upper surface of a base 152, parallel springs 153a and 153b, a pressing slider 154, a pressing roller 155, an elastic ring 156, a positioning slider 157, an eccentric cam 158 and a plate 159 are mounted. In particular, among these members, the eccentric cam 158 and the plate 159, which correspond to rotation main parts, are superposed longitudinally, and integrally coupled with each other by coupling pins 160a, 160b, and 160c, and the eccentric cam 158 is caulked and secured onto the base 152 by caulking cylinders 161 in a manner so as to rotate thereon.

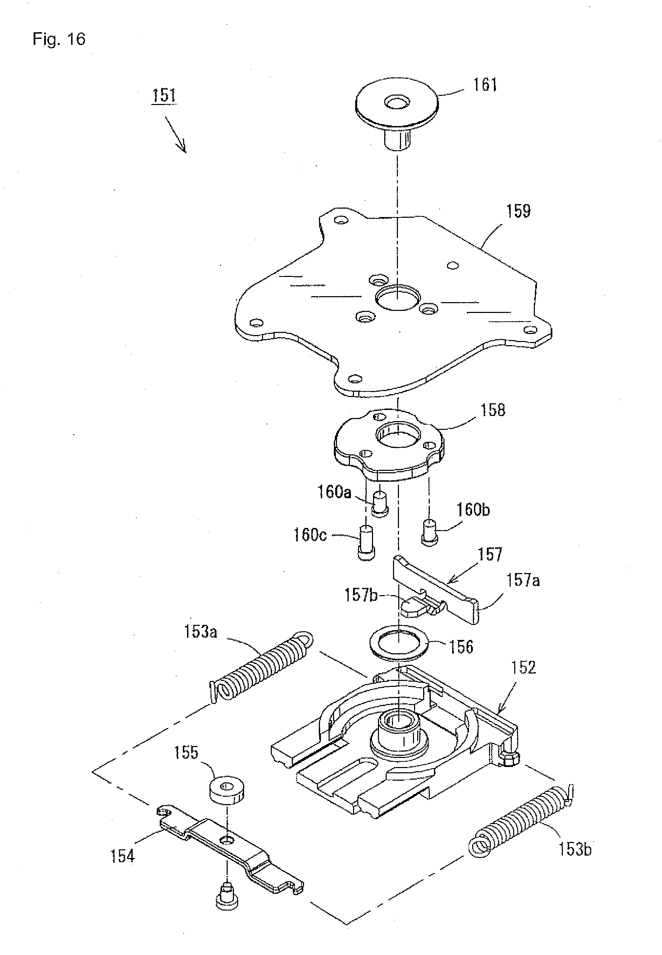

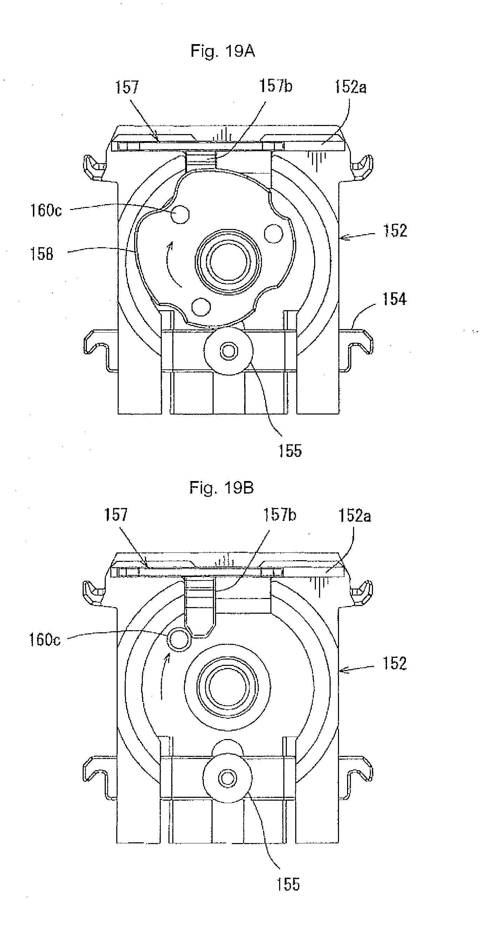

The excessive rotation preventing structure for the rotation supporting mechanism 151 is configured by the positioning slider 157, the coupling pin 160c and slide regulating faces 162a and 162b. As shown in Fig. 16, the positioning slider 157 has a structure in which a laterally elongated vertical member formed into a T-letter shape is prepared as a slide guide member 157a, and this slide guide member 157a is engaged with a lateral slide groove 152a formed in the open position corresponding part of the base 152 so as to slide thereon (Fig. 19), and a horizontal protruding member that protrudes in the horizontal direction is formed in the center portion of the T-letter shape as a position regulating member 157b.

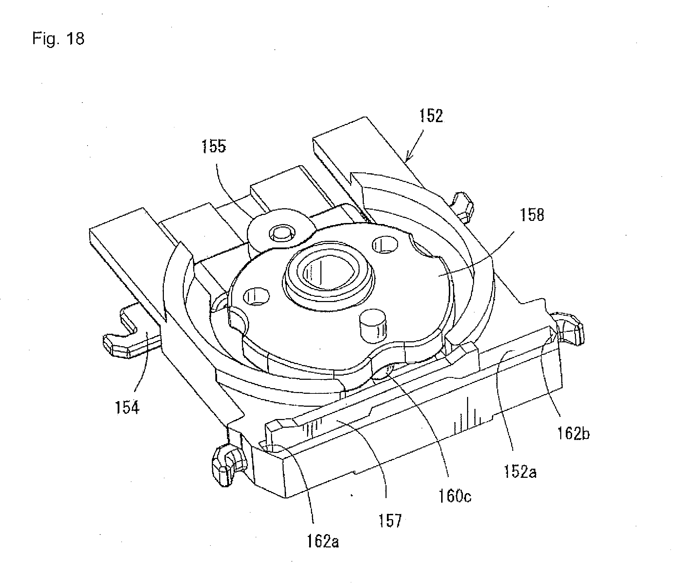

In this case, the amount of sliding movement of the positioning slider 157 is regulated by the slide groove 152a. In other words, the groove end face on the left side in the sliding direction of the slide groove 152a is formed into a slide regulating face 162a on the left side, and the groove end face on the right side is formed into a slide regulating face 162b on the right side (Fig. 18).

On the open position corresponding part of the eccentric cam 158 that relates to the position regulating member 157b, the lower end portion of the coupling pin 160c is placed on the lower face of the eccentric cam 158 so as to protrude perpendicularly downward, and the coupling pin 160c, formed on the open position corresponding part so as to protrude perpendicularly downward, is correspondingly engaged with the position regulating member 157b.

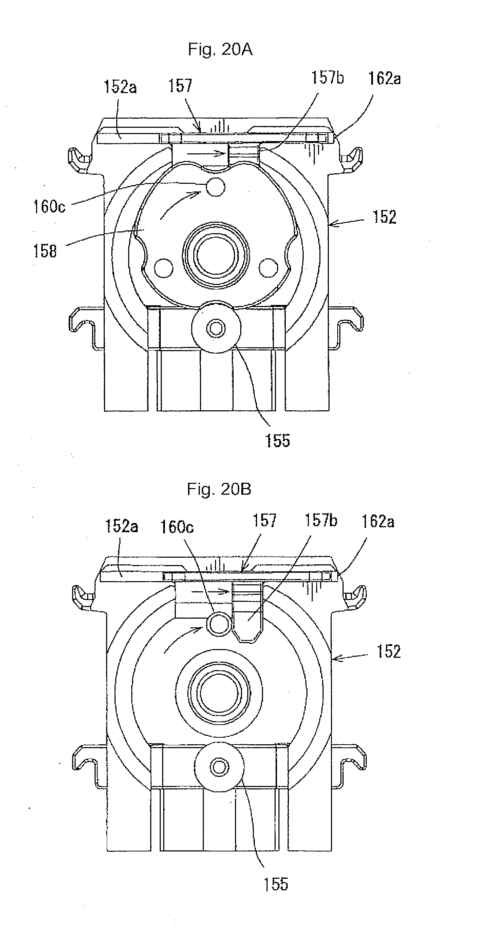

Therefore, as shown in Fig. 19, when the eccentric cam 158 is rotated in the opening direction, for example, rightward by 180 degrees or so, the position regulating member 157b and the coupling pin 160c are correspondingly engaged with each other. Moreover, the position regulating member 157b is pushed in the rotation direction of the eccentric cam 158 so that the positioning slider 157 is allowed to slide, and, as shown in Fig. 20, the positioning slider 157 is made to come into contact with the slide regulating face 162a on the left side for use in open-positioning; thus, the eccentric cam 158 is accurately rotation-regulated to the position of 180 degrees.

In this case, since the rotation supporting mechanism 151 has a right and left symmetrical structure, the eccentric cam 158 is rotated in the same right and left symmetrical movements from the close position of 0 degree to the open position of 180 degrees. Thus, whether the cover is rotated leftward or rightward, it can be rotation-stopped at the same open position accurately with a rotation angle of 180 degrees respectively.

In accordance with the above-mentioned embodiment, the opening operation in the flat plane direction of the cover planarly attached to the main body can be carried out not manually, but automatically; thus, it becomes possible to provide a rotation supporting mechanism that allows the user to operate the cover to open by using one hand, and consequently to improve performances in use. Moreover, the rotation supporting mechanism is further provided with an excessive rotation preventing structure, and the height of this excessive rotation preventing structure is made lower so that it becomes possible to achieve a thinner portable terminal that is suitable for portability.

The present invention can be modified based upon technical idea disclosed in claims, and is not intended to be limited only by the above-mentioned structures of the embodiments.

For example, in the above-mentioned embodiments, the base 15 of the rotation supporting mechanism 14 is attached to the main body 12, and the plate 23 is attached to the cover 13; however, these may be attached in a reversed manner, that is, the cover 13 may be attached to the base 15, with the plate 23 being attached to the main body 12. Moreover, in the above-mentioned embodiments, the right and left symmetrical eccentric cam 22 is used; however, not limited to this, the shape of the eccentric cam may be formed into a laterally asymmetrical shape, or the surface resistances of the right and left circumferential faces of the eccentric cam may be made different from each other, so that the speeds of the leftward rotation and the rightward rotation at the time of the opening operation may be made different. The embodiments have exemplified a structure in which the cover is rotation-stopped at the open position of 90 degrees and the open position of 180 degrees; however, not limited to this, the cover may be rotation-stopped only at the open position of 180 degrees in a limited manner.

### INDUSTRIAL APPLICABILITY

Not limited to the portable telephone, the present invention can be applied to a rotation supporting mechanism of a portable terminal, such as an electronic notebook, a digital camera and a digital video camera.

## Claims

1. An excessive rotation preventing structure for use in a rotation supporting mechanism which, from a closed position with a main body and a cover being superposed on each other, rotates the cover in the superposed state thereof, in a flat plane direction, and stops the rotation at the same open position after the cover has been allowed to freely rotate forwardly or reversely, comprising:
a first engaging member that is attached to an open position corresponding part on the main body side of open position corresponding parts between the main body and the cover that correspond to the open positions at which the cover arrives after the forward or reverse rotation;
a second engaging member attached to the open position corresponding part on the cover side; and
a rotation stopping means that supports one of the two engaging members in a manner so as to move in the rotation direction of the cover, with the other being secured thereto, and when the cover is rotated in the opening direction so that the two engaging members are correspondingly engaged with each other at the open position corresponding part, allows the one of the engaging members to move to a movement regulating position used for position-adjusting the open position so that the cover is rotation-stopped at the open position.

2. An excessive rotation preventing structure for use in a rotation supporting mechanism which, from a closed position with a main body and a cover being superposed on each other, rotates the cover in the superposed state thereof, in a flat plane direction, and stops the rotation at the same open position after the cover has been allowed to freely rotate forwardly or reversely by 180 degrees, comprising:
an eccentric cam that rotates in an eccentric manner in the flat plane direction, and has a close position corresponding part formed at a maximum eccentric rotation position on one of cam faces that have different orientations by 180 degrees after the rotation and an open position corresponding part formed at a minimum eccentric rotation position on the other cam face;
pressing means which, with a pressing direction being set to a direction that is the same as the direction in which the two positions of the close position corresponding part and the open position corresponding part that have different orientations from each other by 180 degrees are connected to each other through the axis center of the eccentric cam, presses the cam face of the eccentric cam, and when the pressed portion corresponds to the close position corresponding part on the cam face, increases the pressing load to the eccentric cam and a rotation regulating force to stop the rotation operation of the eccentric cam and consequently to lower the pressing load to the eccentric cam as coming closer to the open position corresponding part side, and increases the rotation regulating force to the eccentric cam when the pressed portion corresponds to the open position corresponding part to stop the rotation operation of the eccentric cam;
a first engaging member that is attached to the open position on the main body side of open position corresponding parts between the main body and the cover that correspond to the open positions at which the cover arrives after the forward or reverse rotation by 180 degrees, with one of the eccentric cam and the pressing means being attached to the main body with the other being attached to the cover so as to rotation-support the cover;
a second engaging member attached to the open position corresponding part on the cover side; and
rotation stopping means that supports one of the two engaging members in a manner so as to move in the rotation direction of the cover, with the other being secured thereto, and when the cover is rotated in the opening direction so that the two engaging members are correspondingly engaged with each other at the open position corresponding part, allows the one of the engaging members to move to a movement regulating position used for position-adjusting the open position so that the cover is rotation-stopped at the open position.

3. The excessive rotation preventing structure for use in a rotation supporting mechanism according to claim 1 or 2, wherein: the rotation stopping means comprises a rotation stopping lever one end of which serves as a rotation fulcrum, with the other end being shaft-supported thereon so as to freely rotate in the rotation direction of the cover, and an angle regulating unit that regulates the pivotal angle of the rotation stopping lever so that one of the rotation stopping lever and the angle regulating unit is attached to the open position corresponding part on the main body side at which the main body and the cover are allowed to correspond to each other, with the other being attached to the close position corresponding part on the cover side.

4. The excessive rotation preventing structure for use in a rotation supporting mechanism according to claim 1 or 2, wherein: the rotation stopping means comprises a slider that is supported in a manner so as to slide in the rotation direction of the cover and a slide regulating unit that regulates the sliding position of the slider, and one of the slider and the slide regulating unit is attached to the open position corresponding part on the main body side with the other being attached to the open position corresponding part on the cover side.

5. A portable terminal comprising the excessive rotation preventing structure for use in a rotation supporting mechanism according to any of claims 1 to 4.
